# EUROPÄISCHE PATENTANMELDUNG

(11) **EP 1 072 313 A2**
(43) Veröffentlichungstag der Anmeldung: **31.01.2001**
(21) Anmeldenummer: 00115591.0
(22) Anmeldetag: 19.07.2000
(51) Int. Cl.: B01L 3/02, B01J 19/00, G01N 35/10

(54) **Vorrichtung und Verfahren zum Pipettieren von Flüssigkeiten**

(30) Priorität: 24.07.1999 DE 19934896
(71) Anmelder: Max-Planck-Gesellschaft zur Förderung der Wissenschaften e.V., 80539 München (DE)
(72) Erfinder: Kachel, Volker, Dr., 82178 Puchheim (DE)
(74) Vertreter: Hertz, Oliver, Dr.

(57) **Zusammenfassung**

Es wird eine Schlauchpumpeneinrichtung (100) mit mindestens einem auf einer festen Auflage (3) angeordneten Schlauch (2) und einer Abquetscheinrichtung (5,6) beschrieben, die in einem auf die Auflage (3) aufgesetzten Zustand den Schlauch (2) an mindestens einer Klemmposition (A,B) entlang seiner Länge zusammenquetscht und die relativ zur Auflage (3) beweglich ist, wobei die Abquetscheinrichtung (5,6) für eine lineare Umkehrbewegung zwischen zwei voneinander beabstandeten Klemmpositionen (A,B) und/oder zwischen einer Klemmposition und einer Freigabeposition (C) eingerichtet ist. Es wird auch ein Pipettierverfahren unter Verwendung einer derartigen Schlauchpumpeneinrichtung beschrieben.

## Beschreibung

Die Erfindung betrifft eine Vorrichtung zum Pipettieren von Flüssigkeiten, insbesondere eine Schlauchpumpeneinrichtung zum Pipettieren von Flüssigkeiten, und eine Pipettiereinrichtung zum parallelen Pipettieren einer Vielzahl von Flüssigkeiten, Pipettierverfahren und Anwendungen der Schlauchpumpen- bzw. Pipettiereinrichtungen.

In der modernen Biochemie ist es zunehmend wichtig, unter Verwendung von Mikrotiterplatten mit 24, 96 oder mehr Flüssigkeitsreservoiren (Wells), große Anzahlen von Proben parallel mit Reagenzien zu versehen oder sie aus einer Platte in eine andere Platte umzusetzen oder sie auf mehrere Platten zu verteilen. Die Durchführung solcher Arbeiten durch Laborpersonal ist auch unter Verwendung von heute üblichen Mehrfachpipetten mit bis zu 8 Kanälen zeitraubend und durch individuelle Ermüdungserscheinungen der eingesetzten Personen fehleranfällig. Durch Laborroboter mit parallel arbeitenden Pipettierköpfen können solche Arbeiten beschleunigt und die Fehlerwahrscheinlichkeit beträchtlich reduziert werden.

Pipettierköpfe mit 96 und mehr parallelen Pipettenspitzen zur Aufnahme und Abgabe von Flüssigkeiten sind allgemein bekannt. Diese arbeiten mit parallelgeschalteten Spritzen oder Mikropipetten, mit denen die zu pipettierenden Flüssigkeiten angesaugt und wieder abgegeben werden. Solche Pipettierköpfe sind wegen der notwendigen hohen Zahl von Präzisionsspritzen sehr teuer und wegen ihrer Größe und ihres Gewichtes als verfahrbare Pipettierstationen in automatisierten Anlagen nur eingeschränkt geeignet. Die Reinigung der Spritzen bzw. Pipetten zwischen der Pipettierung unterschiedlicher und eventuell auch unverträglicher Proben ist zeitraubend.

Es sind auch kontinuierlich betriebene rotatorische Schlauchquetschpumpen mit Einzelschläuchen oder mehreren parallel betriebenen Schläuchen bekannt, die routinemäßig zum kontinuierlichen Fördern von Flüssigkeiten eingesetzt werden. Eine Anwendung zum Pipettieren von Flüssigkeiten ist bei den herkömmlichen Schlauchquetschpumpen wegen deren kontinuierlichen Förderprinzips und voluminösen Aufbaus ist nur eingeschränkt möglich.

Die Aufgabe der Erfindung ist es, verbesserte Pumpen- und Pipettiereinrichtungen zu schaffen, mit denen die Nachteile herkömmlicher Pipettiereinrichtungen vermieden werden und die insbesondere einen einfachen Aufbau besitzen, eine präzise Flüssigkeitsdosierung in einem großen Volumenbereich ermöglichen und in automatisierte Systeme integrierbar sind. Die Aufgabe der Erfindung ist es auch, verbesserte Pipettierverfahren und Anwendungen der Pipettiereinrichtungen anzugeben.

Diese Aufgaben werden mit einer Schlauchpumpeneinrichtung, einer Pipettiereinrichtung und einem Pipettierverfahren mit den Merkmalen gemäß den Patentansprüchen 1, 9 bzw. 15 gelöst. Vorteilhafte Ausführungsformen und Anwendungen der Erfindung ergeben sich aus den abhängigen Ansprüchen.

Gemäß einem ersten Gesichtspunkt der Erfindung wird eine Schlauchpumpeneinrichtung mit mindestens einem auf einer festen Auflage verlaufenden Schlauch und einer Abquetscheinrichtung bereitgestellt, die den Schlauch betriebszustandsabhängig an mindestens einer Klemmposition zusammenquetschen oder auch freigeben kann, wobei die Abquetscheinrichtung für eine lineare Umkehrbewegung (Bewegung mit Richtungsumkehr) zwischen zwei voneinander beabstandeten Schlauchabschnitten, vorzugsweise zwischen den beiden Schlauchenden, und/oder zwischen einem aufgesetzten und einem abgehobenen Zustand ausgelegt ist. Es wird eine neue Einfach- oder Vielfach-Linearschlauchpumpe mit einer Abquetscheinrichtung (Abquetschrolle oder -leiste) geschaffen, die zum Vorwärts-Rückwärts-Betrieb zwischen verschiedenen Klemmpositionen und/oder zum Zusammenquetschen bzw. Freigeben mindestens eines Schlauches an einer Klemmposition ausgelegt ist. Im Unterschied zu herkömmlichen Pipetten mit einem Spritzenkolben, mit dem ein Über- oder Unterdruck zur Flüssigkeitsaufnahme bzw. -abgabe bereitgestellt wird, ist bei der erfindungsgemäßen Schlauchpumpeneinrichtung das Pipettiervolumen durch mindestens einen elastischen Schlauch gebildet. Je nach Position der Abquetscheinrichtung kann das Pipettiervolumen vergrößert bzw. verkleinert werden. Die Erfinder haben festgestellt, dass mit der linearen Schlauchpumpeneinrichtung beeindruckenderweise eine hohe Dichtheit erzielt und eine präzise Flüssigkeitsdosierung ermöglicht wird.

Die erfindungsgemäße Schlauchpumpeneinrichtung besitzt vorzugsweise eine Vielzahl von Schläuchen, die gemeinsam auf einer Auflage angeordnet und mit der Abquetscheinrichtung gleichzeitig betätigbar sind. Bei gerader und paralleler Ausrichtung der Schläuche auf der Auflage und genauer Ansteuerung der Bewegung der Abquetscheinrichtung werden vorteilhafterweise in allen Schläuchen identische Flüssigkeitsvolumina aufgenommen bzw. abgegeben. Die Reproduzierbarkeit bei der parallelen Bearbeitung von Flüssigkeitsproben ist trotz erheblich vereinfachtem Aufbau so gut wie bei den herkömmlichen Spritzenanordnungen.

Gemäß einer bevorzugten Ausführungsform der Erfindung bildet die Schlauchpumpeneinrichtung der oben genannten Bauart eine Pipettiereinrichtung zum parallelen Pipettieren einer Vielzahl kleiner Flüssigkeitsmengen. Die Pipettiereinrichtung wird vorzugsweise als Pipettierkopf in automatisierten Laborsystemen, z. B. für gentechnische oder biochemische Anwendungen, eingesetzt.

Mit dem neuen Pipettierkopf können parallel N Flüssigkeitsproben gleicher Menge aus N verschiedenen Quellen entnommen werden und an N verschiedenen Zielplätzen wieder abgegeben werden. Der Pipettierkopf enthält vorzugsweise eine Kombination der Schlauchpumpeneinrichtung (Präzisions-Schlauchpumpenpipettierer) für Mengen zwischen 1 und z. B. 100 µl mit einem Saug-Druck-Fördersystem (Saug-Druck-Pipettierer) für größere Mengen im Milliliterbereich. Die Flüssigkeitsaufnahme erfolgt im Mikroliterbereich vorzugsweise durch Schlauchpumpenansaugung. Die Volumenbemessung erfolgt über den von der Abquetscheinrichtung (Abquetschrolle) zurückgelegten Weg bzw. den Abstand der Klemmpositionen bei Beginn bzw. Ende der Ansaugbewegung. Die Abgabe der aufgesaugten und in den Spitzen gespeicherten Flüssigkeiten an den Zielplätzen kann entweder durch inversen Schlauchpumpenvorschub oder nach Abheben der Abquetschrolle durch Einwirkung von geringem Luftüberdruck aus einem kombinierten Luft/Flüssigkeitsbehälter (Kombinationsbehälter oder Kombikessel) erfolgen. Im letzteren Fall funktioniert die Schlauchpumpeneinrichtung als Multiventil.

Besonders vorteilhaft ist die Schlauchpumpeneinrichtung als Multi- oder Mehrfachventil verwendbar, wenn die Abquetscheinrichtung sowohl in der Ebene der Auflage zwischen den Klemmpositionen bewegt als auch aus dem aufgesetzten, klemmenden Zustand in einen freigegebenen Zustand von der Auflage abhebbar ist. Der Multiventilbetrieb ermöglicht ein effektives Spülen der Pipettenspitzen mit ausreichend großen Volumina an Reinigungsflüssigkeiten und eine schnelle und tropfenfreie Abgabe kleiner Flüssigkeitsmengen aus den Pipettenspitzen. Zum Pipettieren wird eine Saugwirkung durch Beaufschlagung der Enden der Schläuche mit einem Unterdruck und Ausbildung des Unterdrucks im Schlauchinneren durch Freigabe der Abquetscheinrichtung erzielt. Umgekehrt kann durch Beaufschlagung mit einem Überdruck die aufgenommene Flüssigkeit abgegeben werden.

Ein Schlauchsystem ist für mindestens 10, vorzugsweise mehr als 20 Schläuche ausgelegt und z. B. mit 24 parallel arbeitenden Pipettenspitzen insbesondere für die Bearbeitung von 24-Well und 96-Well Mikrotiterplatten ausgestattet.

Die integrierte Schlauchinnenreinigung bezieht ihre Reinigungsflüssigkeit aus dem Kombikessel, der durch eine gesteuerte Schwenkbewegung entweder Luft oder Flüssigkeit in die Pumpenschläuche eingibt. Die manuell auswechselbaren Standard-Pipettenspitzen können auch durch Syringen im Schlauchpumpenmodus gereinigt werden.

Zum Absaugen bzw. Eingeben von größeren Reagenzmengen im Milliliterbereich wird ebenfalls der Kombikessel benutzt, aus dem in diesem Falle die normalerweise dort befindliche Reinigungsflüssigkeit abgesaugt wird und -wenn eine Eingabe von Flüssigkeit erfolgen soll- diese durch ein entsprechendes Reagenz ersetzt wird. Nach Anlegen eines entsprechenden Unterdruckes (Sog) oder Überdruckes wird die Abquetschrolle für eine definierte Zeit angehoben, so dass entsprechende größere Mengen von Flüssigkeit aus den Pipettierpositionen in den Kombikessel oder aus dem Kombikessel in die Pipettierpositionen befördert werden. Die Volumenbemessung erfolgt in diesem Fall durch die Höhe des angelegten Soges oder Druckes und die Abhebezeit der Abquetschrolle von den Schläuchen.

Gegenstand der Erfindung ist auch ein Pipettierverfahren, bei dem eine Flüssigkeitsprobe von einem Quellbehälter mit einem Schlauch, in dem ein Unterdruck herrscht, in eine Pipettenspitze aufgenommen, an einen Zielbehälter transportiert und dort aus der Pipettenspitze abgegeben wird. Die Aufnahme der Flüssigkeit in die Pipettenspitze erfolgt durch Ausbildung eines Unterdruckes im Schlauchinneren, indem der Schlauch zunächst an einer ersten Klemmposition an die Pipettenspitze angrenzend mit einer Abquetscheinrichtung zusammengequetscht und dann die Abquetscheinrichtung bewegt wird, so dass sich die Klemmposition von der Pipettenspitze entfernt. Das sich entspannende Schlauchmaterial dehnt sich auf die Schlauchform aus und bildet dabei einen Hohlraum mit einem Unterdruck relativ zur Umgebung. Die Größe des Pipettiervolumens wird durch das Schlauchvolumen zwischen der anfänglichen Klemmposition und einer Klemmposition bestimmt, an der die Bewegung der Abquetscheinrichtung gestoppt wird. Die Flüssigkeitsabgabe erfolgt umgekehrt durch Herausdrücken der Flüssigkeit mit der Abquetscheinrichtung oder mit einem externen Saug-Druck-Fördersystem, das ggf. an das zur Pipettenspitze entgegengesetzte Ende des Schlauches angekoppelt ist. Anwendungsabhängig kann die Pipettenspitze auch durch ein freies Schlauchende oder eine angesteckte Kanüle gebildet werden.

Weitere Einzelheiten und Vorteile der Erfindung werden aus der Beschreibung der beigefügten Zeichnungen ersichtlich. Es zeigen:
- Fig. 1:: schematische Drauf- und Seitenansichten einer erfindungsgemäßen Schlauchpumpeneinrichtung, und
- Fig. 2:: schematische Drauf- und Seitenansichten einer erfindungsgemäßen Pipettiereinrichtung.

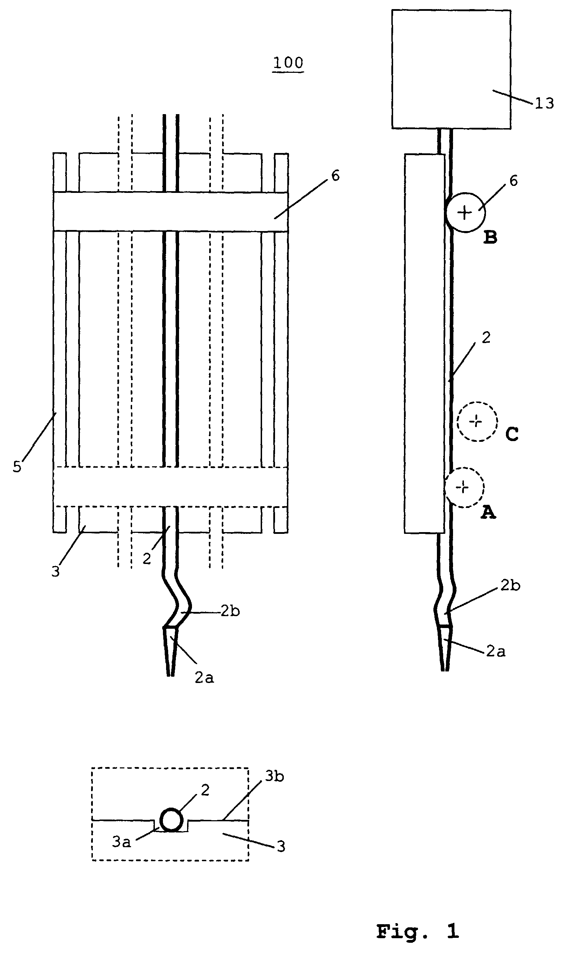

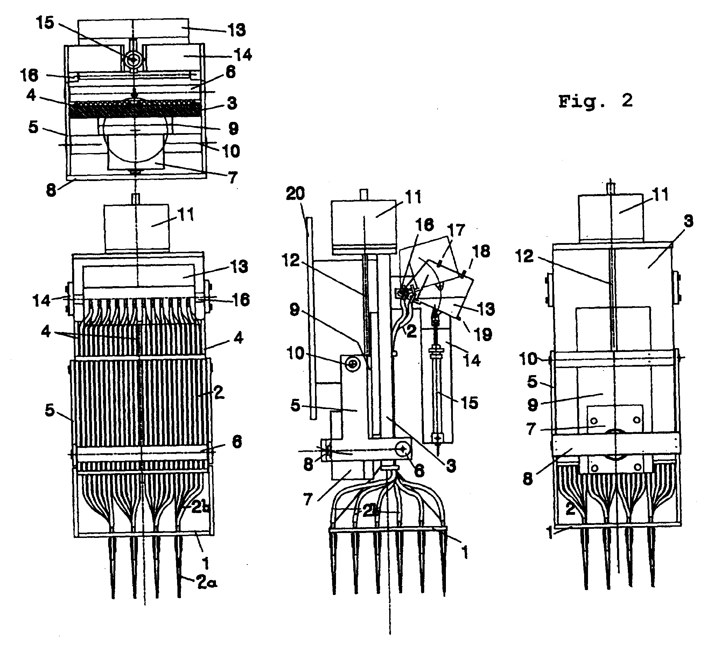

In Fig. 1 ist der Aufbau der Hauptkomponenten einer erfindungsgemäßen Schlauchpumpeneinrichtung illustriert. Die Schlauchpumpeneinrichtung kann mit einem Schlauch (durchgezogen eingezeichnet) oder mehreren Schläuchen (beispielhaft gestrichelt eingezeichnet) realisiert werden. Einzelheiten und Abwandlungen der Anbringung des Schlauches, der Betätigung der Abquetscheinrichtung und der Verwendung in einem Pipettierkopf sind in Fig. 2 illustriert. Es wird jedoch betont, dass die Anwendung der erfindungsgemäßen Schlauchpumpeneinrichtung nicht auf den Einsatz in einem Vielfach-Multipipettierkopf beschränkt ist. Gegenstand der Erfindung ist auch eine einzelne, beispielsweise handbetätigte Pipette mit einer erfindungsgemäßen Schlauchpumpeneinrichtung. In den Fig. 1 und 2 bezeichnen gleiche Bezugszeichen entsprechende Komponenten.

Eine erfindungsgemäße Schlauchpumpeneinrichtung 100 umfaßt mindestens einen auf einer festen Auflage 3 angeordneten Schlauch 2 und eine Abquetscheinrichtung 5, 6. Die Auflage 3 ist beispielsweise eine ebene Platte, in der mindestens eine nutförmige Vertiefung 3a zur Aufnahme des mindestens einen Schlauches 2 verläuft (siehe Einschub in Fig. 1, links unten). Die Vertiefung besitzt vorzugsweise einen Querschnitt, der genügend Platz für die Aufnahme des deformierten Schlauches bildet. Die Tiefe ist je nach Geometrie des Schlauches und in Abhängigkeit von gegebenenfalls auf der Auflage vorgesehenen seitlichen Laufleisten ausgewählt, so dass bei aufgesetzter Abquetscheinrichtung ein sicheres Verschließen des Schlauches an der jeweiligen Klemmposition gewährleistet ist. Die Vertiefung ist beispielsweise kleiner oder gleich einem halben Schlauchdurchmesser.

Die Ausbildung der Vertiefung 3a ist kein zwingendes Merkmal der Erfindung. Bei Verwendung einer Vielzahl von parallel verlaufenden Schläuchen auf einer gemeinsamen Auflage kann auf Vertiefungen verzichtet werden. Die Schläuche liegen dann auf der ebenen Oberfläche der Auflage nebeneinander. Die Anbringung der Schläuche erfolgt beispielsweise durch Ankleben auf der Auflage oder durch eine Querleiste, die die Schläuche in einem angelegten, nicht zusammengedrückten Zustand hält.

Alternativ können anstelle der Vertiefung 3a auch andere Abstandshalter vorgesehen sein, die allgemein dazu ausgelegt sind, die Umkehrbewegung entlang der Auflage 3 mit einem derartigen Abstand von der Auflage 3 durchzuführen, dass die Schläuche nur so stark zusammengeklemmt werden, wie es für einen dichten Verschluß erforderlich ist. Beispielsweise kann der Abstandshalter auch an der Abquetschrolle in Form von seitlichen Kragen gebildet sein. Die seitlichen Kragen an den Enden der Abquetschrolle besitzen einen größeren Durchmesser als der mittlere, die Schläuche zusammenquetschende Bereich der Abquetschrolle. Die Kragen laufen seitlich an den Schläuchen auf der Auflage 3. Es kann auch der Rahmen 5 mit einem entsprechenden Begrenzer zur Erhaltung des Abstandes der Abquetschrolle von der Auflage 3 ausgestattet sein.

Es kann erfindungsgemäß vorgesehen sein, dass die Schläuche auf der Auflage bzw. in den Vertiefungen mit einer axial ausgerichteten Spannung angebracht sind. Durch gespannte Anbringung kann das Schlauchinnenvolumen variiert werden. Durch das Spannen kann eine Justierung der Pipettiervolumina von mehreren Schläuchen auf einer Auflage erfolgen.

An einem in Betriebsposition unteren Ende des Schlauches 2 ist eine Pipettenspitze 2a angebracht, über die die Flüssigkeit in den Schlauch eingesogen wird. Zwischen der Pipettenspitze 2a und dem auf der Auflage 3 verlaufenden Schlauch 2 ist ein Ausgleichsstück 2b vorgesehen. Das Ausgleichsstück 2b kann verschiedene Funktionen haben. Bei kleinen Pipettenspitzen oder bei Betrieb ohne Pipettenspitze bildet das Ausgleichsstück 2b ein Totvolumen, in das die zu pipettierende Flüssigkeit gesaugt wird. Damit wird verhindert, dass die Flüssigkeit in das eigentliche Pipettiervolumen des Schlauches auf der Auflage gelangt. Des Weiteren dient das Ausgleichsstück 2b dem Längenausgleich bei Pipettierköpfen mit einer Vielzahl von parallel betätigten Pipetten (siehe Fig. 2). Um in allen Schläuchen ein identisches Pipettiervolumen bereitzustellen, müssen die Ausgleichsstücke 2b für alle Pipettierspitzen gleich lang sein, auch wenn im Pipettierkopf zwischen den Pipettierspitzen und der Auflage gegebenenfalls bauartabhängig verschiedene Abstände gegeben sind. Das Ausgleichsstück 2b ist vorzugsweise einstückig mit dem Schlauch 2 gebildet, es kann insbesondere bei Einzelpipettenanwendungen weggelassen werden. Am entgegengesetzten Ende ist der Schlauch anwendungsabhängig offen (siehe Fig. 1, linke Ansicht) oder mit einem Saug-Druck-Fördersystem 13 verbunden (siehe Fig. 1, rechte Ansicht, Fig. 2).

Die Abquetscheinrichtung umfasst eine laufende Abquetschrolle 6, die an einem Aufhängungs- und Betätigungsrahmen 5 (in der rechten Ansicht von Fig. 1 nicht dargestellt) angebracht ist. Die Abquetschrolle 6 kann mit dem Rahmen 5 zwischen verschiedenen Positionen bewegt werden, die beispielhaft in der rechten Ansicht von Fig. 1 dargestellt sind. Im auf die Oberfläche 3b der Auflage 3 aufgesetzten Zustand kann die Abquetschrolle 6 zwischen einer vorderen Klemmposition A und hinteren Klemmposition B und entsprechend allen Zwischenpositionen bewegt werden. Durch den Abstand von der vorderen Klemmposition A wird das Pipettiervolumen im Schlauch 2 bestimmt. Die Abquetschrolle kann auch vom Schlauch in eine Freigabeposition abgehoben werden, so dass dieser sich entspannt, wie dies beispielhaft bei Position C illustriert ist. Anstelle der laufenden Abquetschrolle kann erfindungsgemäß auch eine verschiebbare Leiste vorgesehen sein. Die Abquetschrolle 6 (bzw. die Leiste) erstreckt sich senkrecht zur Längsausdehnung des einen oder von mehreren Schläuchen 2 über eine Breite, die sämtliche Schläuche abdeckt. Beim Aufbau der Schlauchpumpeneinrichtung mit nur einem Schlauch 2 können die Auflage 3 und die Abquetscheinrichtung 5, 6 entsprechend schmal ausgeführt werden. Die Auflage 3 kann allgemein selbst Funktionen des Rahmens 5 übernehmen.

Die Auflage 3 ist mit Abstandhaltern ausgestattet, die sicherstellen, dass der Schlauch beim Zusammenquetschen nicht verletzt wird. Als Abstandshalter kann an sich die an die Nut oder Vertiefung 3a angrenzende Oberfläche 3b der Auflage 3 verwendet werden. Es ist aber auch möglich, an den Seiten der Auflage 3 und/oder zwischen den Schläuchen Laufstege anzubringen, die sich auf der Auflage 3 in Längsrichtung der Schläuche erstrecken und auf denen die Abquetschrolle 6 (bzw. Leiste) der Abquetscheinrichtung im aufgesetzten Zustand aufliegt.

Der Schlauch 2 besteht beispielsweise aus Silikonkautschuk und besitzt einen Außendurchmesser von 3 mm und einen Innendurchmesser von 1 mm. Das Pipettiervolumen zwischen den Klemmpositionen A und B beträgt beispielsweise 60 µl. Die Abquetschrolle 6 wird mit einem präzisen Schrittmotor betätigt, so dass Flüssigkeitsvolumen im Bereich von 1 bis 60 µl dosierbar sind. Die Auflage 3 und die Abquetschrolle 6 bestehen beispielsweise aus Kunststoff oder Metall. Der Durchmesser der Abquetschrolle 6 beträgt beispielsweise rund 10 bis 15 mm.

In Fig. 2 ist der prinzipielle Aufbau eines 24-fach Multipipettierkopfes dargestellt, mit dem vorteilhafterweise sowohl 24-Well-Mikrotiterplatten als auch in 4 verschachtelten Zugriffen 96-Well-Mikrotiterplatten bearbeitet werden können. Vorteilhaft ist insbesondere, daß damit auch Umsetzungen von 96-Well Platten in 4x24-Well-Platten vorgenommen werden können. Die Anwendung des Prinzips ist nicht auf 24 parallele Kanäle beschränkt. Durch Bestückung des Kopfes mit mehr Abnahmespitzen und Schläuchen eventuell in einer Mehrebenenanordnung können auch wesentlich mehr Proben parallel bearbeitet werden.

Die in einem 4 x 6 Array angeordenten Pipettierspitzen 2a sind an der Platte 1 befestigt, die fest mit der Grundplatte 3 (Auflage 3) verbunden ist. Anstelle der Pipettenspitzen können auch Kanülen aus Kunststoff- oder Edelstahlrohr verwendet werden. Die Verwendung von handelsüblichen Pipettenspitzen ist jedoch vorteilhaft, weil diese leicht ausgewechselt werden können und ohne zusätzliche Entwicklungsarbeit gute Eigenschaften bei der Flüssigkeitsabgabe im Zielbereich gewährleisten. Von den Pipettenspitzen führen Silikonschläuche 2 identischer Form und Größe über die Grundplatte 3 in den Kombibehälter 13. Für geringe Pipettiermengenunterschiede zwischen den Spitzen ist es wichtig, daß die Pumpenschläuche aus einer einheitlichen Herstellungscharge stammen. Die Schläuche 2 laufen auf der Grundplatte 3 in einer absolut planen Vertiefung von etwa einem halben Schlauchdurchmesser oder sie verlaufen nebeneinander liegend auf der Oberfläche der Grundplatte 3.

Eine Andruckrolle 6 (oder Abquetschrolle 6) ist im Rahmen 5 befestigt, der im Lager 10 drehbar aufgehängt ist. Wird der Pneumatikzylinder 7 betätigt, dann drückt er die Andruckrolle 6 über den Bügel 8 auf die Schläuche und schließt diese durch Zusammenquetschen oder Abklemmen ähnlich zur Funktion einer herkömmlichen rotatorischen Schlauchpumpe ab. Die Rolle 6 mit Bügel und der Anpreßzylinder 7 sind auf dem Verfahrschlitten 9 befestigt, der über den Linear-Schrittmotor 11 aus der gezeichneten Lage bis etwa 6 cm nach oben und zurück bewegt werden kann. Dieser Hub bestimmt die Menge an Flüssigkeit, die bei angepreßter Andruckrolle in die Pipettenspitzen eingesaugt werden kann. Zur Flüssigkeitsabgabe kann durch umgekehrte Drehrichtung des Schrittmotors die Andruckrolle nach unten bewegt werden. Die Laufstege 4, zwischen denen sich die Schläuche befinden, bilden Anschläge für die Abquetscheinrichtung und verhindern, daß die Schläuche stärker zusammengedrückt werden, als es für einen sicheren Verschluß der Schläuche nötig ist. Dadurch werden die Schläuche geschont und die Andruckrolle kann auf den definierten Rolloberflächen der Stege 4 abrollen. Für eine sehr große Anzahl parallel geschalteter Schläuche können mehrere Schlauchebenen mit Abpreßvorrichtungen parallel geschaltet werden.

Der Kombibehälter 13 kann entweder nur Druckluft enthalten oder Druckluft und eine gewisse Menge Flüssigkeit für Spülzwecke oder ein Reagenz zum Einpipettieren in Proben. Er ist in einem Lager 16 verschwenkbar gelagert und kann im Pipettierbetrieb mit einem dem Anwendungszweck angepaßten Luftüberdruck versehen werden. Die Schlauchenden sind in der Nähe des Lagers 16 in den Kombibehälter 13 eingeführt. Befindet sich der Kombibehälter 13 in der gezeichneten Basislage, dann sammelt sich die Flüssigkeit auf der vom Lager 16 entfernten, tiefer liegenden Seite des Kombibehälters und gibt die Schlauchenden für die Druckluft frei. Durch Aktivierung des Pneumatikzylinders 15 wird der Kombibehälter 13 um das Lager 16 gekippt, die Flüssigkeit läuft auf die linke Seite des Kessels und überdeckt die Schlauchenden. Die eingebaute Zwischenwand mit Durchlaßöffnungen am Boden verhindert ein heftiges Überschwappen der Flüssigkeit in den Bereich der Schlauchenden. Somit kann in der gekippten Stellung Flüssigkeit mit dem im Kessel herschenden Druck über die Schläuche zu den Pipettenspitzen geführt werden. Voraussetzung ist hierfür, daß die Andruckrolle 6 von den Schläuchen 2 abgehoben ist. Durch Rückkippen des Kombibehälters 13 kann wieder auf Lufteinlaß in die Schlauchenden im Kessel umgeschaltet werden. Über den Stutzen 17 wird dem Kombibehälter 13 die Druckluft zugeführt, über den Anschluß 18 kann Flüssigkeit in den Kombibehälter 13 eingeleitet werden. Der Stutzen 19 dient zum Entleeren des Kombikessels.

Wenn man den Kombibehälter 13 mit Sog anstelle von Druck betreibt, dann kann das System auch zum Absaugen größerer Flüssigkeitsmengen verwendet werden. Hierzu muß die Andruckrolle 6 ebenfalls von den Schläuchen abgehoben werden.

Der Pipettierkopf ist eine selbständige Einheit, die über die Platte 20 an beliebige z-, x-z- oder x-y-z-Verfahrsysteme angebaut werden kann. Die Betriebsversorgung umfaßt die Schrittmotoransteuerung, zwei Luftdruck-Steuerleitungen und die Luft- bzw. Flüssigkeitsversorgungsleitungen für den Kombikessel. Die pneumatischen Antriebe 7 und 15 können auch durch hydaulische oder elektrische Antriebe ersetzt werden.

Durch Verwendung des Schlauchpumpen- und Saug/Druck-Fördersystems alleine oder durch Kombination beider Systeme kann der Multipipettierkopf vielseitig eingesetzt werden, wie im folgenden beispielhaft erläutert wird.

### Pipettierung kleiner Mengen ausschließlich mit dem Schlauchpumpensystem

Das Schlauchpumpensystem kann völlig unabhängig vom Sog/Druck-System als Pipettierer eingesetzt werden. Der Kombibehälter 13 findet hierbei keine Verwendung und kann bei entsprechend ausgelegten Pipettierköpfen fortgelassen werden. Die Andruckrolle (Abquetschrolle) bleibt durch Aktivierung des Pneumatikzylinders 7 immer auf die Schläuche bzw. die Laufstege 4 aufgedrückt. Die Pipettenspitzen werden in die Flüssigkeit der Quellproben eingetaucht, der Schlitten 9 wird durch Aktivierung des Linearmotors 11 nach oben bewegt, bis die zu pipettierende Menge in die Spitzen 2a eingesaugt ist. Diese Menge bemißt sich nach dem Schlauchinnendurchmesser und der Länge des Hubs. Am Zielort wird die in den Spitzen 2a befindliche Flüssigkeit durch eine entgegengesetzte Bewegung des Schlittens 9 nach unten und entsprechendes Abrollen der Andruckrolle 6 nach unten wieder aus den Spitzen abgegeben. Eine Innenreinigen der Spitzen muß in diesem Betriebsmodus durch Einsaugen und Ausstoßen von Spülflüssigkeit durch Auf- und Abfahren der Andruckrolle erfolgen. Eine Außenspülung der Spitzen kann immer durch ein- oder mehrmaliges Eintauchen der Spitzen in Spülflüssigkeit erfolgen.

### Pipettierung kleiner Mengen durch kombinierte Schlauchpumpenansaugung und druckgesteuertes Ausblasen

Die Effizienz des Systems kann wesentlich erhöht werden, wenn man die in die Spitzen eingesaugte Flüssigkeit am Zielort durch Anwendung von sanftem Luftdruck aus dem Kombibehälter ausbläst. Hierzu wird der Kombibehälter in der Basislage, in der nur Druckluft auf die Schlauchenden wirkt, permanent unter geringen Überdruck von beispielsweise 10 bis ca. 30 mbar gesetzt. Beim Ansaugen der Flüssigkeit bereitet der vorhandene geringe Ausblasdruck im Kombibehälter und damit in den Schläuchen oberhalb der Andruckrolle keine Probleme. Zur Abgabe der in den Spitzen vorhandenen Flüssigkeit wird nun durch Deaktivieren des Zylinders 8 die Andruckrolle 6 von den Schläuchen abgehoben. Der Ausblasdruck wird in die Pipettenspitzen durchgeschaltet und bläst die Flüssigkeit in kürzester Zeit ohne Tropfenbildung in die Zielbehälter aus. Vor Aufnahme von neuen Proben muß der Schlitten 9 in die Ansaugstellung zurückgefahren werden. Dies kann während des Verfahrens zur neuen Quellposition erfolgen.

Dieser kombinierte Betriebsmodus ist auch deshalb vorteilhaft, weil sich die Pumpenschläuche nach dem Abheben der Andruckrolle von Verschiebungen, die durch Abrollen der Walze auf den Schläuchen entstehen können, jeweils wieder entspannen. Auch die Innenreinigung kann unter Ausnutzung des Kombikessels wesentlich beschleunigt werden. Hierfür muß Reinigungsflüssigkeit im rechten Teil des Kessels vorhanden sein und der Pipettierkopf über einer Reinigungsstation positioniert werden, in der die aus den Spitzen austretende Flüssigkeit aufgefangen wird und ggf. auch eine Außenreinigung der Spitzen vorgenommen werden kann. Während der Kessel (Kombibehälter) für das Ausblasen der Proben in der Grundstellung verbleibt, muß er für die Innenreinigung in Kippstellung gebracht werden, damit die Schlauchenden überflutet werden und danach die Reinigungsflüssigkeit nach Abheben der Andruckrolle hydrostatisch und vom Überdruck durch die Schläuche gedrückt wird. Die Länge der Abhebezeit der Andruckrolle bestimmt zusammen mit dem Druck im Kombibehälter die durch die Schläuch fließende Menge an Spülflüssigkeit. Es ist vorteilhaft, zum Beendigen der Spülung zunächst die Andruckrolle bei gefluteten Schlauchenden im Kombibehälter wieder zu schließen, dann den Kombibehälter rückzukippen und dann die Andruckrolle zum Durchblasen von Luft durch die Schläuche und Pipettenspitzen nochmals für eine gewisse Zeit zu öffnen. Damit wird verhindert, daß durch Schwappen der Flüssigkeit ungleichmäßig Luftblasen in die Schläuche eingebracht werden, die zu unterschiedlichen Strömungswiderständen und damit zu ungleichmäßigem Spülmitteldurchfluß durch die Schläuche führen.

### Austausch größerer Flüssigkeitsmengen nur mit dem Sog-Druck-System

Zum Austausch größerer Flüssigkeitsmengen ist das auf hohe Pipettiergenauigkeit bei kleinen Mengen im Bereich < 100µl ausgelegte Schlauchpumpensystem nur mit entsprechend erhöhtem Aufwand einsetzbar. Man kann hierzu aber sehr gut das Sog-Druck-System verwenden, wenn es sich darum handelt, alle Proben mit dem gleichen Medium zu versehen. Die Andruckrolle des Schlauchpumpensystems wird hierbei als Multiventil benutzt, über dessen Öffnungszeiten in Verbindung mit den im Kombikessel herrschenden Drücken die Bemessung der zu befördernden Mengen festgelegt wird. Eine Begrenzung der Volumina ergibt sich durch das nutzbare Volumen des Kombikessels, das geteilt durch die Anzahl der zu beschickenden Proben die Menge pro Probe ergibt.

Eine nützliche Anwendung dieses Prinzips ist z.B. der Medientausch bei Zellkulturen in Mikrotiterplatten. Hierzu muß zunächst das bisherige Medium von den Kulturen abgesaugt werden und dann neues Medium aufgebracht werden. Zum Absaugen des bisherigen Mediums wird in der Grundstellung über den Anschluß 17 Sog an den Kombikessel angelegt.

Über die in die Wells eintauchenden Pipettenspitzen wird nach Öffnen der Andruckrolle 6 das bisherige Medium in den Kessel eingesaugt. Durch die Schräglage sammelt sich die Flüssigkeit rechts über dem Absaugstutzen 19, über den sie schließlich auch beseitigt wird. Das neue Medium wird über den Stutzen 18 in den Kessel eingefüllt, unter Druck gesetzt und nach Kippen des Kessels und Öffnen der Andruckrolle in die Wells eingegeben.

Durch Verwendung getrennter Kessel und Spitzen für die zu- und abzuführenden Medien können nach diesem Prinzip spezialisierte Systeme für sehr schnellen Medientausch aufgebaut werden.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

### Bezugszeichenliste:

- 1: Pipettierplatte mit den als 4 x 6 Array angeordneten Pipettenspitzen
- 2: Silikon-Pumpenschläuche
- 2a: Pipettenspitze
- 2b: Ausgleichsstück
- 3: Auflage (oder Grundplatte) der Linear-Schlauchpumpe
- 3a: Vertiefung
- 3b: Oberfläche der Auflage 3
- 4: Laufstege zum Abrollen der Abquetschrolle 6
- 5: Aufhängungs-und Betätigungsrahmen für die Abquetschrolle 6
- 6: Abquetschrolle der Schlauchpumpe
- 7: Pneumatik-Anpreßzylinder für die Abquetschrolle
- 8: Betätigungsbügel, auf den der Pneumatik-Anpreßzylinder 7 wirkt
- 9: Verfahrschlitten
- 10: Drehlager für den Rahmen der Andruckrolle
- 11: Linear-Schrittmotor
- 12: Spindel des Linear-Schrittmotors
- 13: Kombibehälter für Druck-/Sogluft, Reinigungsflüssigkeit oder Reagenzien
- 14: Halterahmen für den Kippbehälter und pneumatische Betätigung
- 15: Pneumatikzylinder zum Kippen des Kombikessels
- 16: Befestigung und Drehlager des Kombikessels
- 17: Luftanschluß des Kombikessels (Sog und Druck)
- 18: Anschluß für Flüssigkeitszufuhr in den Kombikessel
- 19: Anschluß für Flüssigkeitsabsaugung aus dem Kombikessel
- 20: Befestigungsplatte für den Pipettierkopf am Schlitten eines x-y-z-Verfahrsystems

## Patentansprüche

1. Schlauchpumpeneinrichtung (100) mit mindestens einem auf einer festen Auflage (3) angeordneten Schlauch (2) und einer Abquetscheinrichtung (5,6), die in einem auf die Auflage (3) aufgesetzten Zustand den Schlauch (2) an mindestens einer Klemmposition (A,B) entlang seiner Länge zusammenquetscht und die relativ zur Auflage (3) beweglich ist,
**dadurch gekennzeichnet, dass**
die Abquetscheinrichtung (5,6) für eine lineare Umkehrbewegung zwischen zwei voneinander beabstandeten Klemmpositionen (A,B) und/oder zwischen einer Klemmposition und einer Freigabeposition (C) eingerichtet ist.

2. Schlauchpumpeneinrichtung gemäß Anspruch 1, bei der die Auflage (3) mit einem Abstandshalter (3a,4) ausgestattet ist, der einen Anschlag zur Begrenzung des Zusammenquetschens des Schlauches bildet.

3. Schlauchpumpeneinrichtung gemäß Anspruch 2, bei der der Abstandshalter durch eine Nut (3a) in der Auflage (3), wobei der Schlauch (2) in der Nut (3a) teilweise versenkt angeordnet ist, oder durch mindestens zwei seitlich am Schlauch verlaufende Laufstege (4) gebildet wird, über die der Schlauch teilweise hinausragt.

4. Schlauchpumpeneinrichtung gemäß einem der vorhergehenden Ansprüche, bei der die Abquetscheinrichtung durch eine laufende Abquetschrolle oder eine verschiebbare Leiste gebildet wird, die jeweils mit einer Antriebseinrichtung (5) zwischen den Schlauchabschnitten verstellbar sind.

5. Schlauchpumpeneinrichtung gemäß einem der vorhergehenden Ansprüche, bei der eine Vielzahl von Schläuchen auf der Auflage (3) angeordnet sind und die Abquetscheinrichtung dazu eingerichtet ist, im auf die Auflage (3) aufgesetzten Zustand alle Schläuche gleichzeitig zusammenzuquetschen.

6. Schlauchpumpeneinrichtung gemäß einem der vorhergehenden Ansprüche, bei der der Abrollweg der Abquetscheinrichtung (5,6) auf der Auflage (3) geradlinig oder gekrümmt ist.

7. Schlauchpumpeneinrichtung gemäß einem der vorhergehenden Ansprüche, bei der an einem ersten Ende des mindestens einen Schlauches eine Pipettenspitze (2a) vorgesehen ist und ein zweites, entgegengesetztes Ende des Schlauches eine freie Öffnung bildet oder mit einem Vorratsbehälter (13) verbunden oder an einem Saug-Druck-Fördersystem angeschlossen ist.

8. Schlauchpumpeneinrichtung gemäß einem der vorhergehenden Ansprüche, bei der die Abquetscheinrichtung (5,6) von der Auflage (3) in die Freigabeposition (C) abhebbar angeordnet ist, wobei der mindestens eine Schlauch (2) im abgehobenen Zustand der Abquetscheinrichtung (5,6) einen entspannten Zustand einnimmt.

9. Schlauchpumpeneinrichtung gemäß Anspruch 8, die eine Mehrfachventileinrichtung bildet.

10. Pipettiereinrichtung, die mit einer Schlauchpumpeneinrichtung gemäß einem der Ansprüche 1 bis 9 ausgestattet ist.

11. Pipettiereinrichtung gemäß Anspruch 10, bei der die Schlauchpumpeneinrichtung mit einer Vielzahl von Schläuchen versehen ist, an deren Enden sich jeweils eine Pipettenspitze (2a) befindet, wobei die Pipettenspitzen matrixartig in geraden Reihen und/oder Spalten angeordnet sind.

12. Pipettiereinrichtung gemäß Anspruch 10 oder 11, bei der mehrere Schlauchpumpeneinrichtungen jeweils mit einer Vielzahl von Schläuchen einen Aufbau mit mehreren Abquetschebenen bilden.

13. Pipettiereinrichtung gemäß Ansprüche 10 bis 12, bei der alle Schläuche mit einem Kombinationsbehälter (13) zur Aufnahme eines unter Unter- oder Überdruck stehenden Gases oder einer Flüssigkeit verbunden sind.

14. Pipettiereinrichtung gemäß Anspruch 13, bei der der Kombinationsbehälter verschwenkbar angeordnet ist.

15. Pipettiereinrichtung gemäß Anspruch 13 oder 14, bei der der Kombinationsbehälter mit einem Saug-Druck-Fördersystem verbunden ist.

16. Pipettierverfahren, bei dem eine Flüssigkeitsprobe von einem Quellbehälter in eine Pipettenspitze (2a) und/oder ein Ausgleichsstück (2b) mindestens eines Schlauches (2) aufgenommen wird, indem im Schlauch (2) mit einer Abquetscheinrichtung (5,6) ein Unterdruck erzeugt wird, die von einer Klemmposition (A) nahe der Pipettenspitze (2a) oder dem Ausgleichsstück (2b) zu einer entfernten Klemmposition (B) bewegt wird, und bei dem die Flüssigkeit zu einem Zielbehälter bewegt wird.

17. Pipettierverfahren gemäß Anspruch 16, bei dem die Abgabe der Flüssigkeit in den Zielbehälter durch eine umgekehrte Bewegung zwischen den Klemmpositionen erfolgt.

18. Pipettierverfahren gemäß Anspruch 16, bei dem die Abgabe der Flüssigkeit in den Zielbehälter durch Ausübung eines Überdrucks erfolgt, der an das zur Pipettenspitze (2a) oder das Ausgleichsstück (2b) entgegengesetzte Ende des Schlauches (2) angelegt wird, wobei der Überdruck durch Freigabe des mindestens einen Schlauches durch Abheben der Abquetscheinrichtung in eine Freigabeposition (C) ausgeübt wird.

19. Verwendung einer Vorrichtung oder eines Verfahrens gemäß einem der folgenden Ansprüche zum Pipettieren von Flüssigkeiten, zum Flüssigkeitswechsel an Mikrotiterplatten und/oder zum Durchmischen von Flüssigkeiten.
